# EUROPEAN PATENT SPECIFICATION

(11) **EP 3 628 501 B1**
(45) Date of publication and mention of the grant of the patent: **04.08.2021**
(21) Application number: 19208539.7
(22) Date of filing: 16.03.2016
(51) Int. Cl.: B41J 3/407, B41J 2/21

(54) **METHOD FOR PRINTING AN IMAGE ON A SURFACE**
VERFAHREN ZUM DRUCKEN EINES BILDES AUF EINER OBERFLÄCHE
PROCÉDÉ PERMETTANT D'IMPRIMER UNE IMAGE SUR UNE SURFACE

(30) Priority: 29.05.2015 US 201514726387
(43) Date of publication of application: 01.04.2020
(62) Divisional of application: 16160553.0
(73) Proprietor: The Boeing Company, Chicago, IL 60606-1596 (US)
(72) Inventor: Mathis, Dennis R., Chicago, IL 60606-1596 (US); Freeman, Philip L., Chicago, IL 60606-2016 (US)
(74) Representative: Witte, Weller & Partner Patentanwälte mbB

(56) References cited:
- EP-A1- 2 839 964
- EP-A2- 2 208 541
- US-A1- 2013 257 984
- US-A1- 2014 063 096
- US-B1- 6 508 531

## Description

### FIELD

The present disclosure relates generally to an automated method of printing images on a surface using a robotic mechanism.

### BACKGROUND

The painting of an aircraft is a relatively challenging and time-consuming process due to the wide range of dimensions, the unique geometry, and the large amount of surface area on an aircraft. For example, the wings protruding from the fuselage can interfere with the painting process. The height of the vertical tail above the horizontal tail can present challenges in accessing the exterior surfaces of the vertical tail. Adding to the time required to paint an aircraft are complex paint schemes that may be associated with an aircraft livery. In this regard, the standard livery of an airline may include images or designs with complex geometric shapes and color combinations and may include the name and logo of the airline which may be applied to different locations of the aircraft such as the fuselage, the vertical tail, and the engine nacelles.

Conventional methods of painting an aircraft require multiple steps of masking, painting, and demasking. For applying an aircraft livery with multiple colors, it may be necessary to perform the steps of masking, painting, and demasking for each color in the livery and which may add to the overall amount of time required to paint the aircraft. In addition, the aircraft livery must be applied in a precise manner to avoid gaps that may otherwise expose a typically-white undercoat which may detract from the overall appearance of the aircraft. Furthermore, the process of applying paint to the aircraft surfaces must be carried out with a high level of control to ensure an acceptable level of coating thickness to meet performance (e.g., weight) requirements.

US 2013/257984 A states, according to its abstract, that a system for printing an image, preferably a multicolor halftone image, onto at least one non-planar area of a surface of an object, for example a section of a body of a vehicle, includes an inkjet print head having nozzles, a robot, preferably an articulated robot, creating a primary movement, the primary movement including at least two printing paths of the inkjet print head being lateral to each other, and a device creating a secondary movement, the secondary movement being substantially perpendicular to the primary movement and causing the printing paths to laterally adjoin each other. As a result, undesired streaks between the printing paths may advantageously be reduced or prevented.

EP 2 208 541 A2 states, according to its abstract, that a method involves coordinating a spraying direction and a spraying quantity of nozzles to each other in such a manner that a coating element includes a fluid jet with a core jet. The core jet is coated to a core area with a liquid quantity approximately during impact on a surface, where the coating element includes an edge jet surrounding the core jet partially. The core area is partially surrounded by an edge area. The liquid quantity is reduced to zero with increasing distance from an edge of the core area within a pre-determined edge measure. An independent claim is also included for a digital coating system comprising a coating unit having digitally controllable nozzles.

US 6 508 531 B1 states, according to its abstract, that a method for reducing undesired variations of print density in a printed output is implemented by selectively increasing the number of drops of ink deposited in rows traveled by nozzles corresponding to a reduced-output region of the print head compared to the pattern of drops which would be deposited if all nozzles were operating normally.

US 2014/063096 A1 states, according to its abstract, that a method and a device for imaging and/or varnishing the surfaces of objects or vehicles, etc. includes adapting a time lag between an application of fluid and further treatment thereof, such as drying ink or varnish, to a spreading behavior of the fluid during the application thereof. The fluid may be applied to the surface of the object in sections, firstly drying the fluid in individual sections before applying it to the next section.

EP 2 839 964 A1 states, according to its abstract, provision of a printing apparatus which is capable of printing a pattern and/or a character on a curved printed surface, such as an airframe surface of a passenger aircraft, in a very short time. A head array having therein a plurality of inkjet nozzles for ejecting ink toward a remote position by supplying pressurized air to every ink tanks filled with the ink, respectively, is mounted on a linear array so as to be able to perform linear reciprocation, the linear rail being held by an robot arm of a multi-articulated robot, and a position at which the robot arm is to be disposed is controlled on the basis of position information, while controlling of driving of predetermined nozzles in the head array is performed in association with the position information.

As can be seen, there exists a need in the art for a method for painting an aircraft including applying complex and/or multi-colored images in a precise, cost-effective, and timely manner.

### SUMMARY

The above-noted needs associated with aircraft painting are specifically addressed and alleviated by the method of claim 1. Further developments of the claimed invention can be gathered from the dependent claims.

The features, functions and advantages that have been discussed can be achieved independently in various embodiments of the present disclosure or may be combined in yet other embodiments, further details of which can be seen with reference to the following description and drawings below.

### BRIEF DESCRIPTION OF THE DRAWINGS

These and other features of the present disclosure will become more apparent upon reference to the drawings wherein like numbers refer to like parts throughout and wherein:
Figure 1 is a block diagram of an example of an image forming system;
Figure 2 is perspective view of an aircraft surrounded by a plurality of gantries supporting one or more image forming systems for printing one or more images on the aircraft;
Figure 3 is a perspective view of the aircraft showing one of the gantries positioned adjacent to a vertical tail and supporting an image forming system for printing an image on the vertical tail;
Figure 4 is an end view of the aircraft showing image forming systems positioned on opposite sides of the aircraft;
Figure 5 is a perspective view of a robot taken along line 5 of Figure 4 and illustrating the robot mounted to a crossbeam of a gantry and having a printhead mounted on an arm of the robot;
Figure 6 is a side view of the image forming system taken along line 6 of Figure 4 and illustrating the printhead printing an image on the vertical tail;
Figure 7 is a plan view of an example of a printhead being moved along a rastering path to form an image slice having an image gradient band overlapping the image gradient band of an adjacent image slice;
Figure 8 is a sectional view of a printhead taken along line 8 of Figure 7 and illustrating overlapping image gradient bands of the image slices printed by the printhead;
Figure 9 is a magnified view of a portion of a printhead taken along line 9 of Figure 8 and showing progressively increasing droplet spacings as may be ejected by active nozzles to form an image gradient band;
Figure 10 is a magnified view of a portion of a printhead showing progressively decreasing droplet sizes as may be ejected by the nozzles to form an image gradient band;
Figure 11 is a diagrammatic sectional view of adjacent image slices with overlapping image gradient bands;
Figure 12 is a plan view of the adjacent image slices of Figure 11 showing the overlapping image gradient bands;
Figure 13 is an example of a printhead printing a reference line while printing a new image slice;
Figure 14 is a sectional view taken along line 14 of Figure 13 and illustrating a printhead including a reference line printing mechanism and one or more reference line sensors for sensing the reference line of an existing image slice;
Figure 15 is a magnified view taken long line 15 of Figure 14 and showing one of the nozzles of the printhead printing the reference line while the remaining nozzles of the printhead print the image slice;
Figure 16 is a magnified view of an example of a printhead having a reference line sensor for sensing the reference line of an existing image slice;
Figure 17 is a side view of an example of a robot having one or more high-bandwidth actuators coupling the printhead to an arm of the robot;
Figure 18 is a side view of an example of a plurality of high-bandwidth actuators coupling a printhead to an arm of a robot;
Figure 19 is a side view of the printhead after repositioning by the high-bandwidth actuators into alignment with the reference line and reorientation of the printhead face parallel to the surface;
Figure 20 is a perspective view of an example of a delta robot having a plurality of high-bandwidth actuators coupling the printhead to an arm of a robot;
Figure 21 is a flowchart having one or more operations that may be included in method of printing an image on a surface wherein the parallel image slices each have one or more image gradient bands along the side edges of the image slices;
Figure 22 is a flowchart having one or more operations that may be included in a method of printing an image on a surface wherein the image slices have a reference line for aligning a new image slice with an existing image slice.

### DETAILED DESCRIPTION

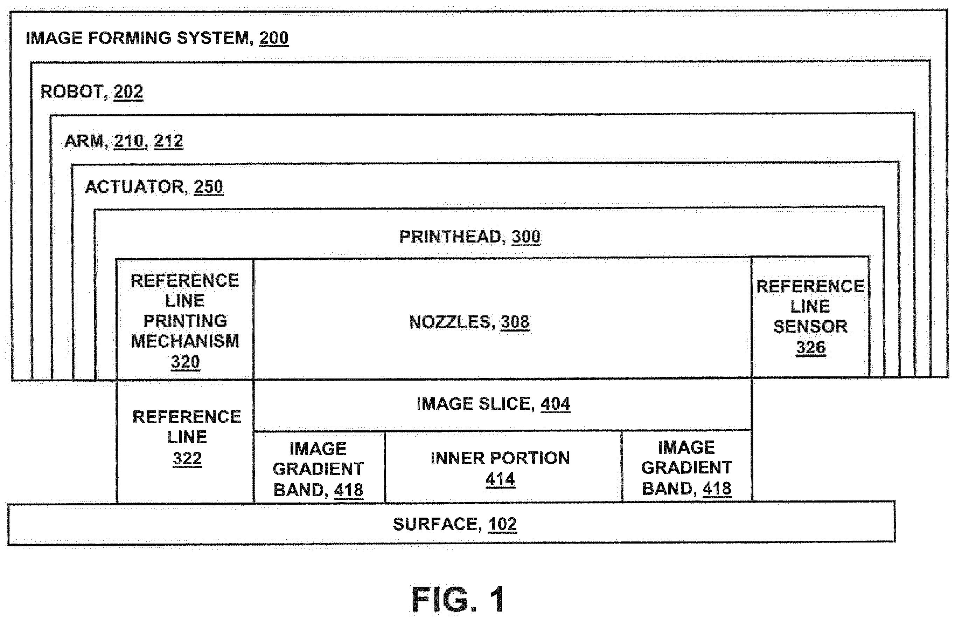

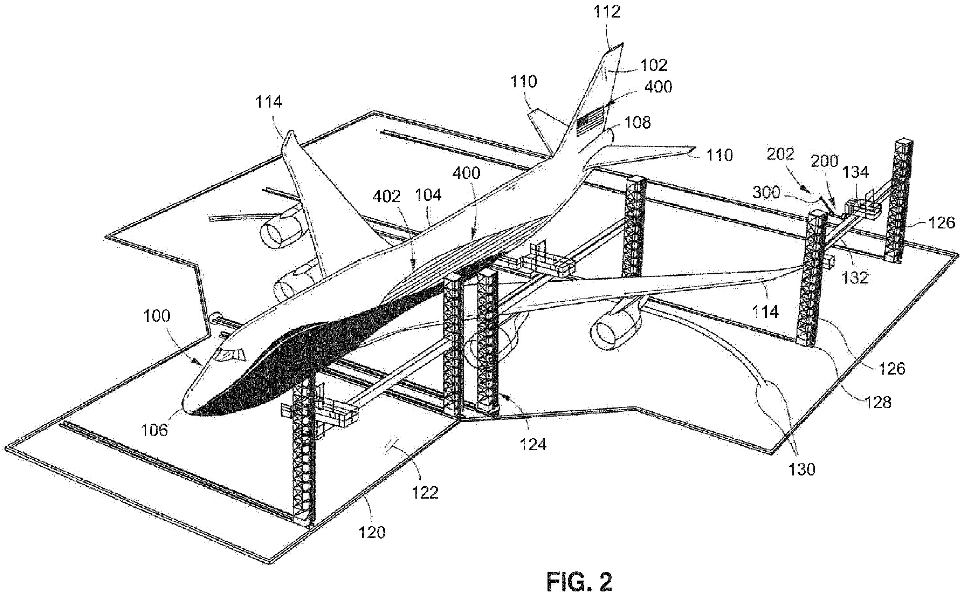

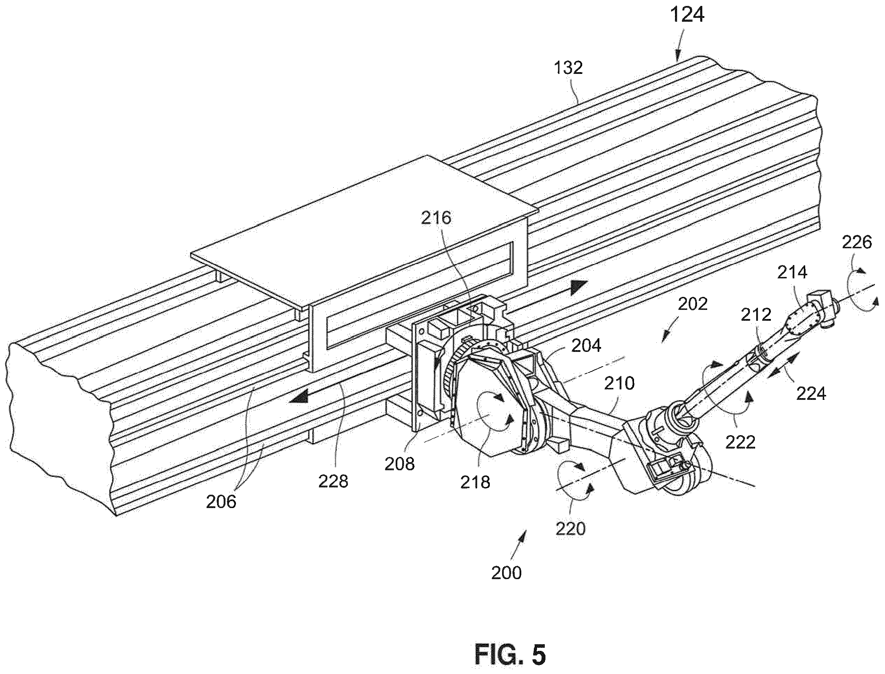

Referring now to the drawings wherein the showings are for purposes of illustrating various embodiments of the present disclosure, shown in Figure 1 is a block diagram of an example of an image forming system 200 as may be implemented for robotically (e.g., automatically or semi-automatically) printing an image 400 (Figure 2) on a surface 102. The system 200 may include a robot 202 (a robotic mechanism) and/or at least one arm (e.g., a first and second arm 210, 212). The printhead 300 may be mounted on an arm (e.g., the second arm 212). In some examples, the system 200 may include one or more high-bandwidth actuators 250 coupling the printhead 300 to the end 214 (Figure 5) of the arm. As described below, such high-bandwidth actuators 250 may provide precise and rapid control over the position and orientation of the printhead 300 during printing of an image slice 404.

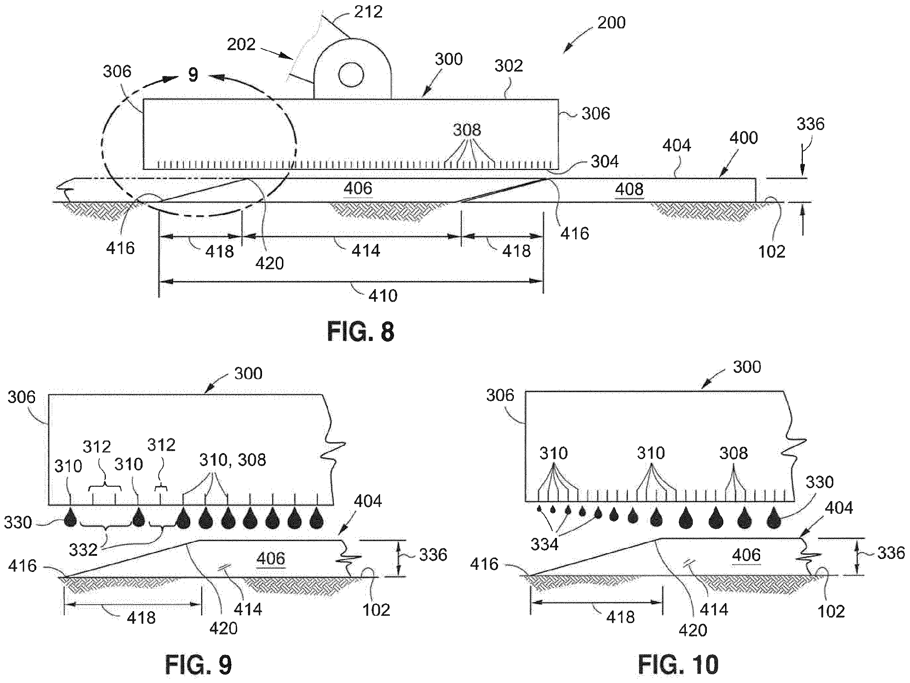

The printhead 300 may be configured as an inkjet printhead having a plurality of nozzles 308 or orifices for ejecting droplets 330 (Figure 10) of ink, paint, or other fluids or colorants onto a surface 102 to form an image 400. The inkjet printhead 300 may be configured as a thermal inkjet printer, a piezoelectric printer, or a continuous printer. However, the printhead 300 may be provided in other configurations such as a dot matrix printer or other printer configurations capable of printing an image 400 on a surface 102.

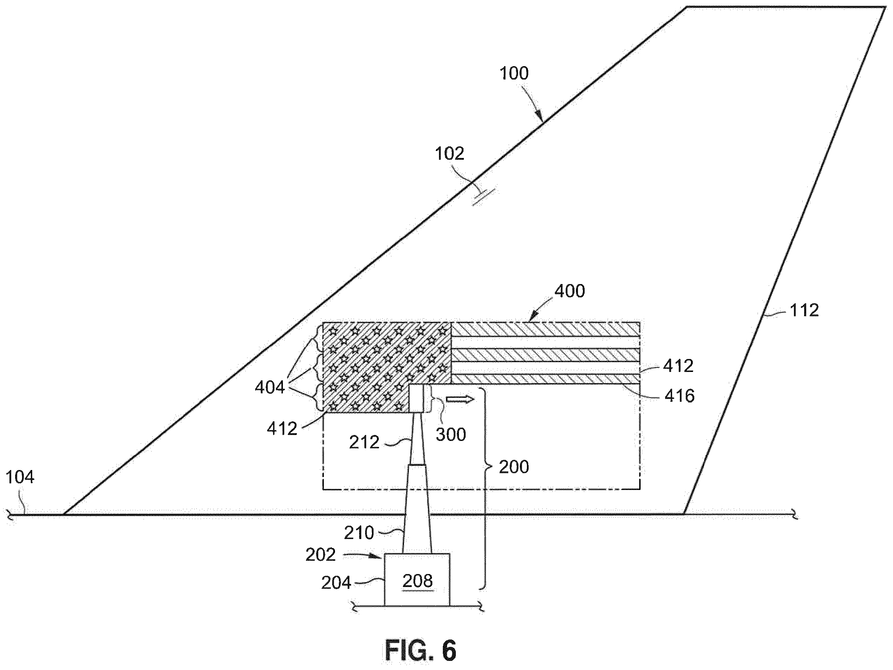

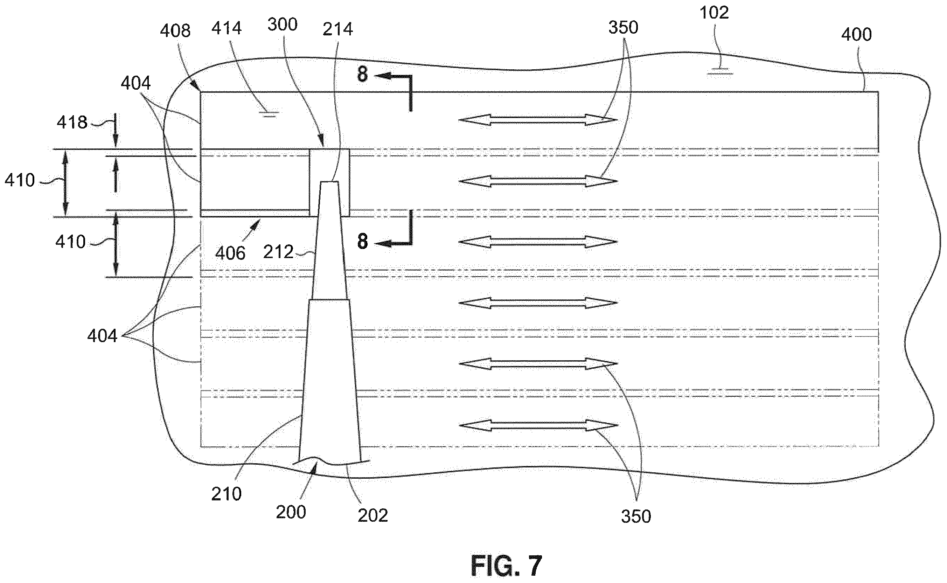

The image forming system 200 may print image slices 404 on a surface 102 along a series of parallel rastering paths 350 (Figure 7). The parallel image slices 404 may collectively form an image 400. In one example, the printhead 300 may print an image slice 404 in overlapping relation to an adjacent image slice 404. In this regard, the printhead 300 may be configured to print an image slice 404 with an image gradient band 418 along at least one side edge 416 (Figure 6) of the image slice 404. The image gradient band 418 of one image slice 404 may overlap the image gradient band 418 of an adjacent image slice 404. The image intensity within an image gradient band 418 may decrease along the direction transverse to the direction of the rastering path 350. By overlapping the image gradient bands 418 of adjacent image slices 404, gaps in the image 400 may be prevented. In the present disclosure, the image intensity within overlapping image gradient bands 418 may result in a substantially uniform image gradient across the width of an image 400 such that the overlaps may be visually imperceptible. In one example, the image intensity within the overlapping image gradient bands 418 may be substantially equivalent to the image intensity within an inner portion 414 of each image slice 404.

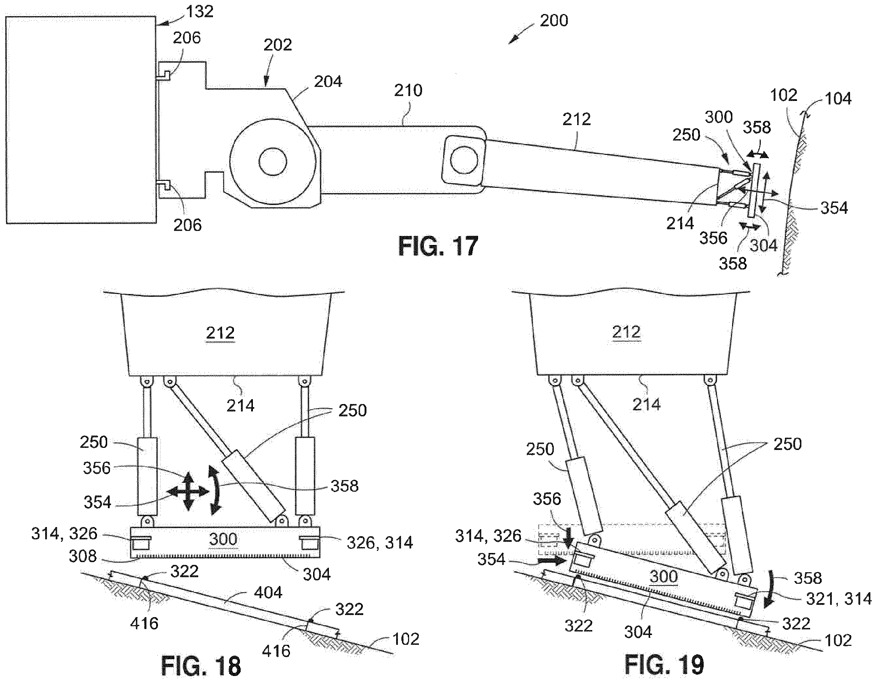

In another example of the image forming system 200, the printhead 300 may include a reference line printing mechanism 320 that may print a reference line 322 during the printing of an image slice 404. For example, a reference line 322 may be printed along a side edge 416 of an image slice 404. The printhead 300 may include a reference line sensor 326 configured to detect and/or sense the reference line 322 of an existing image slice 408 and transmit a path-following-error signal to the robot 202 causing the robot arm (Figure 5) or high-bandwidth actuators 250 (see Figures 17-20) to correct or adjust the printhead 300 (e.g., in real time) such that the side edge 416 of the new image slice 406 is maintained in alignment with the side edge 416 of the existing image slice 408 during the printing of the new image slice 406. In this manner, the reference line 322 may allow the printhead 300 to precisely follow the rastering path 350 of a previously-printed image slice 404 such that the side edges 416 of the new and existing image slices 406, 408 (Figure 7) are aligned in non-gapping and/or non-overlapping relation to one another, and thereby avoiding gaps between adjacent image slices 404 which may otherwise detract from the quality of the image 400.

Figure 2 is perspective view of an aircraft 100 and a gantry system which may be implemented for supporting one or more image forming systems 200 as disclosed herein. The aircraft 100 may have a fuselage 104 having a nose 106 at a forward end and an empennage 108 at an aft end of the fuselage 104. The top of the fuselage 104 may be described as the crown, and the bottom of the fuselage 104 may be described as the keel. The aircraft 100 may include a pair of wings 114 extending outwardly from the fuselage 104. One or more propulsion units may be mounted to the aircraft 100 such as to the wings 114. The empennage 108 may include a horizontal tail 110 and a vertical tail 112.

In Figure 2, the gantry system may be housed within a hangar 120 and may include a plurality of gantries 124 positioned on one or more sides on the aircraft 100. Each one of the gantries 124 may include a pair of vertical towers 126 that may be movable via a motorized base 128 along a floor track system 130 that may be coupled to or integrated into a floor 122. Each gantry 124 may include a crossbeam 132 extending between the towers 126. The crossbeam 132 of each gantry 124 may include a personnel platform 134. In addition, the crossbeam 132 may support at least one robot 202 that may be movable along the crossbeam 132. Advantageously, the gantry system may provide a means for positioning the robot 202 such that the printhead 300 has access to the crown, the keel, and other exterior surfaces 102 of the aircraft 100 including the sides of the fuselage 104, the vertical tail 112, the propulsion units, and other surfaces 102.

Although the system 200 and method of the present disclosure is described in the context of printing images on an aircraft 100, the system 200 and method may be implemented for printing images on any type of surface, with out limitation. In this regard, the surface 102 may be a surface of a motor vehicle including a tractor-trailer, a building, a banner, or any other type of movable or non-movable structure, object, article, or material having a surface to be printed. The surface may be planar, simply curved, and/or complexly curved.

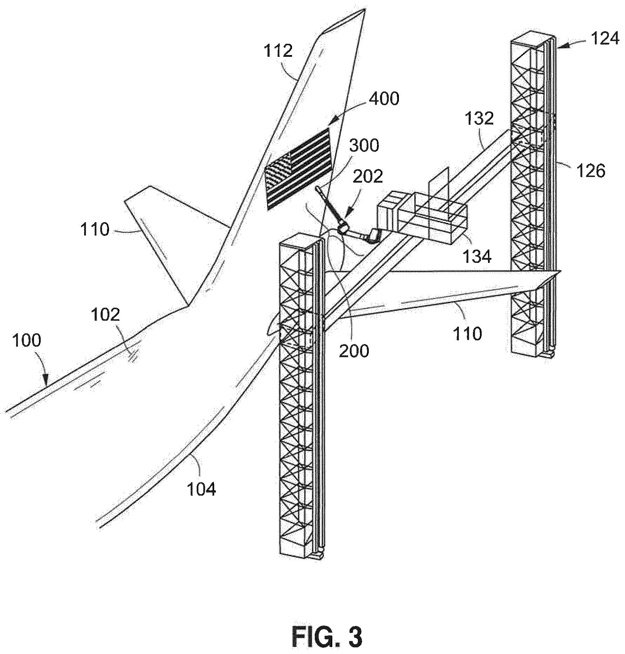

Figure 3 shows a gantry 124 positioned adjacent to the vertical tail 112. A robot 202 mounted to the crossbeam may support an image forming system 200 for printing an image 400 on the vertical tail 112. In Figure 3, the image 400 is shown as a flag which may be printed on the vertical tail 112 such as by using ink from an inkjet printhead 300. However, the printhead 300 may be configured to apply images using other fluids including, but not limited to paint, pigment, and/or other colorants and/or fluids. In addition, the image forming system 200 disclosed herein is not limited to forming graphic images.

In the present disclosure, the term "image" includes any type of coating that may be applied to a surface 102 (Figure 2). An image may have a geometric design, any number of color(s) including a single color, and/or may be applied in any type of coating composition(s). In one example, the image 400 may include a graphic design, a logo, lettering, symbols, and/or any other types of indicia. In this regard, an image 400 may include an aircraft livery 402 which may comprise a geometric design or pattern that may be applied to the exterior surfaces 102 of an aircraft 100, as described above. The image 400 may include a reproduction of a photograph. Even further, an image 400 may be a monotone coating of paint, ink, or other colorant or fluid, and is not limited to a graphic design, logo, or lettering or other indicia.

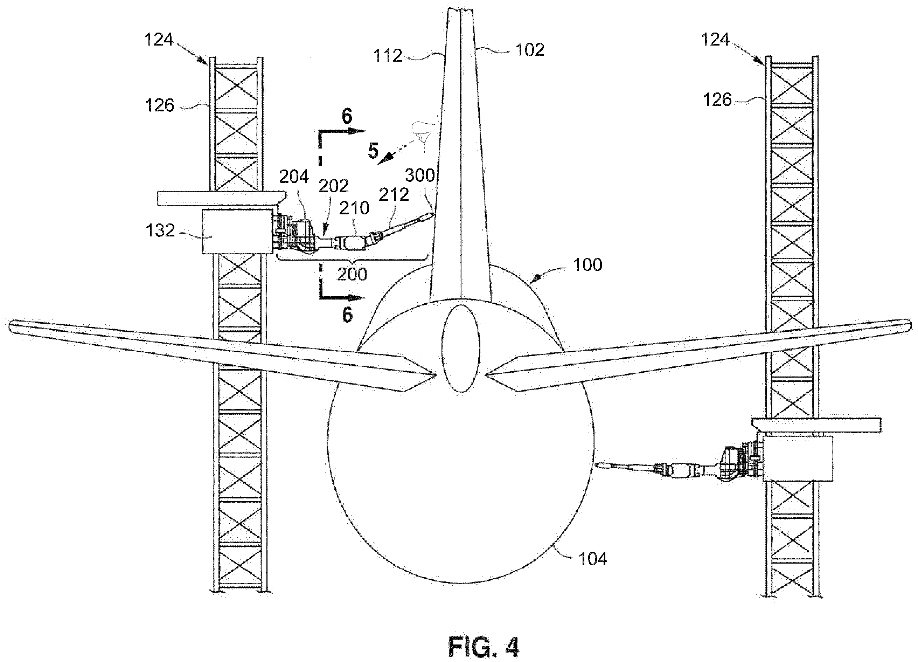

Figure 4 is an end view of an aircraft 100 showing image forming systems 200 positioned on opposite sides of the aircraft 100. Each image forming system 200 may include a robot 202 having one or more arms and a printhead 300 coupled to a terminal end 214 (Figure 4) of the arm of the robot 202. One of the image forming systems 200 is shown printing an image 400 (e.g., a flag) on a vertical tail 112. The other image forming system 200 is shown a printing an image 400 such as the geometric design of an aircraft livery 402 (e.g., see Figure 2) on a side of fuselage 104.

Although the robot 202 of the image forming system 200 is described as being mounted on a gantry 124 supported on a crossbeam 132 suspended between a pair of towers 126 (Figures 1-5), the robot 202 may be supported in any manner, without limitation. For example, the robot 202 may be suspended from an overhead gantry 124 (not shown). Alternatively, the robot 202 may be mounted on another type of movable platform. Even further, the robot 202 may be non-movably or fixedly supported on a shop floor (not shown) or other permanent feature.

Figure 5 is a perspective view of a robot 202 mounted to a crossbeam 132 of a gantry 124 and having a printhead 300 mounted on an arm of the robot 202. The robot 202 may be movable along guide rails 206 extending along a lengthwise direction of the crossbeam 132. In the example shown, the robot 202 may include a robot base 204, a first arm 210, and a second arm 212, with the printhead 300 mounted on the end 214 of the second arm 212. The robot base 204 may allow for rotation of the robot base 204 about a first axis 216 relative to the crossbeam 132. The first arm 210 may be rotatable about a second axis 218 defined by a joint coupling the first arm 210 to the robot base 204. The second arm 212 may be rotatable about a third axis 220 defined by a joint coupling the second arm 212 to the first arm 210. In addition, the second arm 212 may be swivelable about a fourth axis 222 extending along a length of the second arm 212. The length of the second arm 212 may be extendable and retractable to define a fifth axis 224 of movement.

In Figure 4, 5 the printhead 300 is shown being rotatable about a sixth axis 226 defined by a joint coupling the printhead 300 to the second arm 212. The robot base 204 may include a robot drive system (not shown) for propelling the robot base 204 along the length of the crossbeam 132 and defining a seventh axis 228 of movement of the robot 202. The robot 202 may include a controller 208 for controlling the operation of the base 204, the arms, and/or the printhead 300. Although shown as having a first arm 210 and a second arm 212, the robot 202 may include any number of arms and joints for movement about or along any number of axes to allow the printhead 300 to reach any one of a variety of different locations and orientation relative to a surface 102. In some examples, the robot 202 may be devoid of a base 204 and/or the robot may comprise a single arm to which the printhead 300 may be coupled.

Figure 6 is a side view of the image forming system 200 printing an image 400 on the vertical tail 112. The first arm 210 and second arm 212 may be movable relative to the base 204 of the robot 202 to position the printhead 300. The printhead 300 is movable by the arms over the surface 102 along one or more rastering paths 350 to print an image slice 404 on the surface 102. The printhead 300 may be moved along parallel rastering paths 350 to form parallel images slices 404 that collectively define the image 400. The robot 202 may be configured to maintain the orientation of the printhead face 304 parallel to the local position on the surface 102 as the printhead 300 is moved over the surface 102.

Figure 7 shows an example of a printhead 300 being moved along a rastering path 350 to form an image slice 404. Each one of the rastering paths 350 is shown as being straight when viewed from above along a direction normal to the surface 102. However, the printhead 300 may be moved along a rastering path 350 that is curved or a combination of curved and straight. The printhead 300 may sequentially print a plurality of parallel image slices 404 side-by-side to collectively form an image 400 on the surface 102.

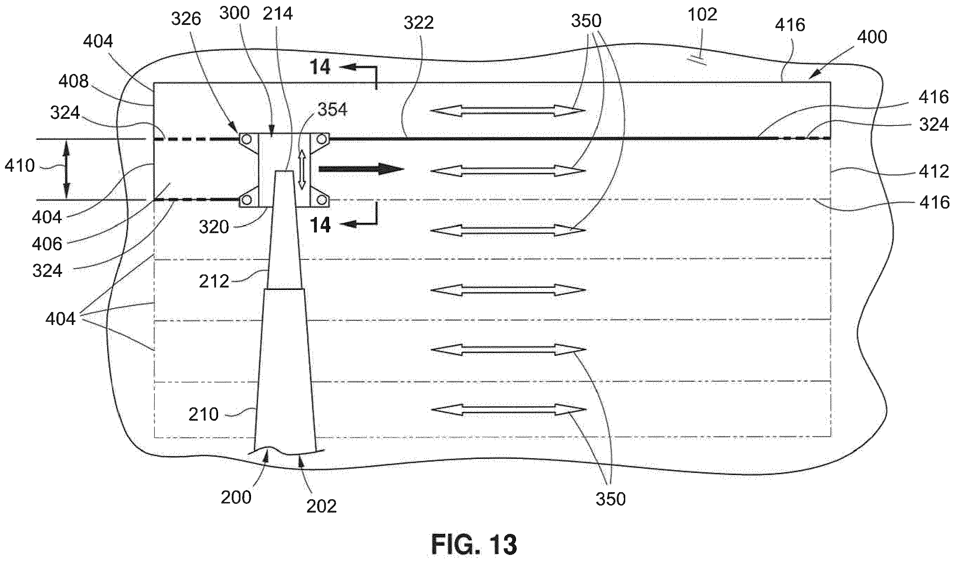

Figure 8 is a sectional view of a printhead 300 printing image slices 404 on a surface 102. The printhead width 302 may be oriented parallel to a transverse direction 354 (Figure 13) to the rastering path 350. The printhead 300 may include a plurality of nozzles 308 or orifices distributed between opposing widthwise ends 306 of the printhead 300. For example, an inkjet printhead may include thousands of orifices. The printhead 300 may eject droplets 330 (Figure 10) of ink, paint, or other fluids from the orifices to form a coating having a coating thickness 336 on the surface 102.

Each image slice 404 (Figure 8) may have opposing side edges 416 defining a bandwidth 410 of the image slice 404. The printhead 300 may be configured to print an image slice 404 with an image gradient band 418 along at least one of the side edges 416. In the example shown, an image slice 404 may contain an inner portion 414 bounded on opposite sides by an image gradient band 418. An image gradient band 418 may be described as a band within which the intensity of the color of the image slice 404 changes (e.g., decreases) along a transverse direction 354 relative to the direction of the rastering path 350 from an inner boundary 420 of the image gradient band 418 to the side edge 416. For example, the inner portion 414 of the image slice 404 may be black in color. Within the image gradient band, the color may gradually change from black at the inner boundary 420 (e.g., a relatively high intensity) to white (e.g., a relatively low intensity) at the side edge 416 of the image slice 404. An image gradient band 418 of an image slice 404 may be wider than the inner portion 414 of the image slice 404. For example, an image gradient band 418 may be no more than 30% the bandwidth 410 of the image slice 404.

The printhead 300 may be moved along the rastering paths 350 such that the image gradient bands 418 of the image slices 404 overlap. Advantageously, the overlapping rastering paths 350 allow for gaps and overlaps representing deviations from the nominal spacing between adjacent image slices 404 resulting in a reduced likelihood that such deviations from the nominal image slice spacing are visually perceptible. In this regard, the image gradient bands 418 on the side edges 416 of the adjacent image slices 404, when superimposed, result in imperceptible image edges even with imperfect tracking by the robot 202 along the rastering paths 350. In this manner, the image gradient bands 418 allow for printing of complex, intricate, and multi-colored images in multiple, single-pass image slices 404 on large-scale surfaces 102 using large-scale rastering devices such as the robot 202 shown in Figures 1-5.

Figure 9 is a magnified view of a printhead 300 showing one example for forming an image gradient band 418. As indicated above, the decrease in the intensity of the image gradient band 418 may be achieved by reducing or tapering the coating thickness 336 along a transverse direction 354 (Figure 13) from the inner boundary 420 of the image gradient band 418 to the side edge 416 of the image slice 404. The droplet spacing 332 may be uniform within the inner portion 414 of the image slice 404. In Figure 9, the coating thickness 336 within the image gradient band 418 may be tapered by progressively increasing the droplet spacing 332 between the droplets 330 ejected by the nozzles 308. In this regard, some of the nozzles 308 (e.g., orifices) of the printhead 300 in the area wherein the image gradient band 418 is to be printed may be electronically deactivated and may be referred to as inactive nozzles 312, and only active nozzles 310 within the image gradient band 418 may eject droplets 330 to form the image gradient band 418. In other examples, the printhead 300 may be provided with progressively larger gaps between nozzles 308 for the area wherein the image gradient band 418 is to be printed. Figure 10 is a magnified view showing another example of a printhead 300 forming an image gradient band 418 by maintaining the nozzles 308 as active nozzles 310 producing a uniform droplet spacing, and progressively decreasing the droplet size 334 in the area where the image gradient band 418 is to be formed. In still further examples, and image gradient band 418 may be formed by a combination of controlling the droplet spacing 332 and controlling the droplet size 334. However, other techniques may be implemented for forming image gradient band 418 and are not limited to the examples shown in the Figures and described above. The printhead 300 may be configured to form the image gradient band 418 with an image gradient that is linearly decreasing. Alternatively, the image gradient within the image gradient band 418 may be non-linear.

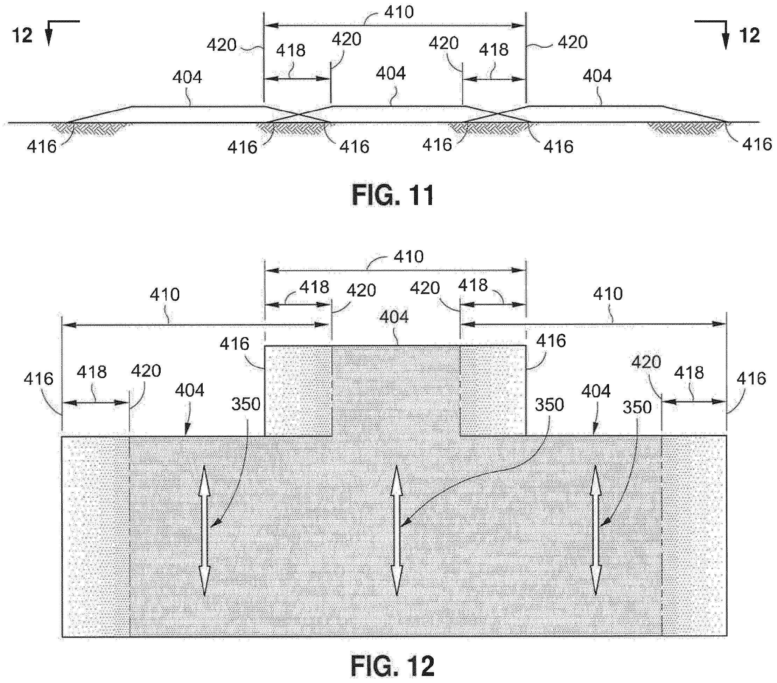

Figure 11 is a diagrammatic sectional view of adjacent image slices 404 with overlapping image gradient bands 418. Shown is the coating thickness 336 (Figure 10) in the image gradient band 418 and in the inner portion 414 of each image slice 404. Figure 12 is a plan view of the image slices 404 of Figure 11 showing the overlapping image gradient bands 418 and the parallel rastering paths 350 of the image slices 404. In the system 200 as shown, the arm (Figure 7) may move the printhead 300 to print a new image slice 406 in parallel relation to an existing image slice 408 (e.g., a previously-printed image slice 404) in a manner such that an image gradient band 418 of the new image slice 406 (Figure 8) overlaps an image gradient band 418 of the existing image slice 408. In this regard, the side edge 416 of each image slice 404 may be aligned with an inner boundary 420 of an overlapping or overlapped image gradient band 418. However, in an example not shown, the printhead 300 may print image slices 404 in a manner to form a gap between the side edge 416 of an image gradient band 418 of a new image slice 406 and an existing image slice 408. As indicated above, the printhead 300 may print the image gradient band 418 of the new image slice 406 and the existing image slice 408 such that the overlap has an image intensity equivalent to the image intensity of the inner portion 414 of the new image slice 406 and/or the existing image slice 408.

In a still further example not shown, the printhead 300 (Figure 10) may form an image gradient end on at least one of opposing ends of an image slice 404. An image gradient end may have an image intensity that may decrease toward an end edge (not shown) of the image slice 404. Such an image gradient end may provide a means for blending (e.g., feathering) the image slice 404 with the color and design of the existing color and design of the surface 102 area surrounding the newly-applied image 400. For example, the system may apply a newly-applied image 400 to a portion of a surface that may have undergone reworking such as the removal and/or replacement of a portion of a composite skin panel (not shown) and/or underlying structure. The image gradient ends of the newly-applied image slices 404 may provide a means for blending into the surrounding surface 102. The image gradient end may also facilitate the blending on a new image slice 406 with the image gradient end of another image 400 located at an end of a rastering path 350 of the new image slice 406.

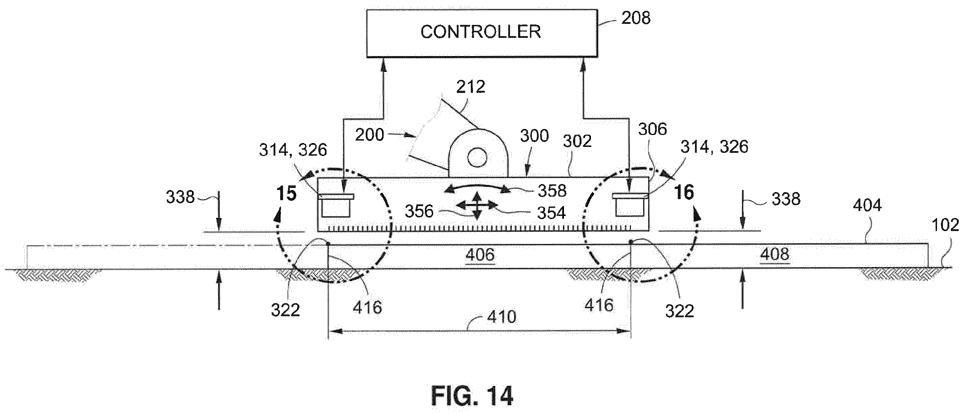

Referring to Figure 13, shown is an example of a printhead 300 mounted on an end 214 of a robot arm and being movable by the arm over a surface 102 along a rastering path 350 while printing a new image slice 406 adjacent to an existing image slice 408. The printhead 300 may include a reference line printing mechanism 320 configured to print a reference line 322 when printing the new image slice 406. The reference line 322 may provide a means for the printhead 300 to precisely track the rastering path 350 of an existing image slice 408. The printhead 300 may include a reference line sensor 326 such as an image detection system for sensing the reference line 322 and providing path error feedback to the controller 208 (Figure 14) to allow the robot 202 to generate path correction inputs to the printhead 300 such that the side edge 416 of the new image slice 406 is maintained in alignment with the side edge 416 of the existing image slice 408.

Figure 14 shows an example of a printhead 300 printing an image slice 404 adjacent to an existing image slice 408. The existing image slice 408 may include a reference line 322 along one of the side edges 416. The printhead 300 may have one or more reference line sensors 326 mounted on each one of the widthwise ends 306 of the printhead 300. One of the reference line sensors 326 may be configured to sense the reference line 322 of an existing image slice 408. In addition, the printhead 300 may include one or more position sensors 314 for monitoring the position and/or orientation of the printhead 300 relative to the surface 102. In some examples, the reference lines 322 sensor may be configured as position sensors 314 to sense the position and/or orientation of the printhead 300 in addition to sensing the reference line 322.

The position sensors 314 at one or both of the widthwise ends 306 of the printhead 300 may measure a normal spacing 338 of the printhead 300 from the surface 102 along a direction locally normal to the surface 102. Feedback provided by the position sensors 314 to the controller 208 may allow the controller 208 to adjust the arm position such that the face of the printhead 300 is maintained at a desired normal spacing 338 from the surface 102 such that the droplet may be accurately placed on the surface 102. In further examples, the controller 208 may use continuous or semi-continuous feedback from the position sensors 314 to rotate the printhead 300 as necessary along a roll direction 358 such that the face of the printhead 300 is maintained parallel to the surface 102 as the printhead 300 is moved over the surface 102 which may have a changing and/or curved contour.

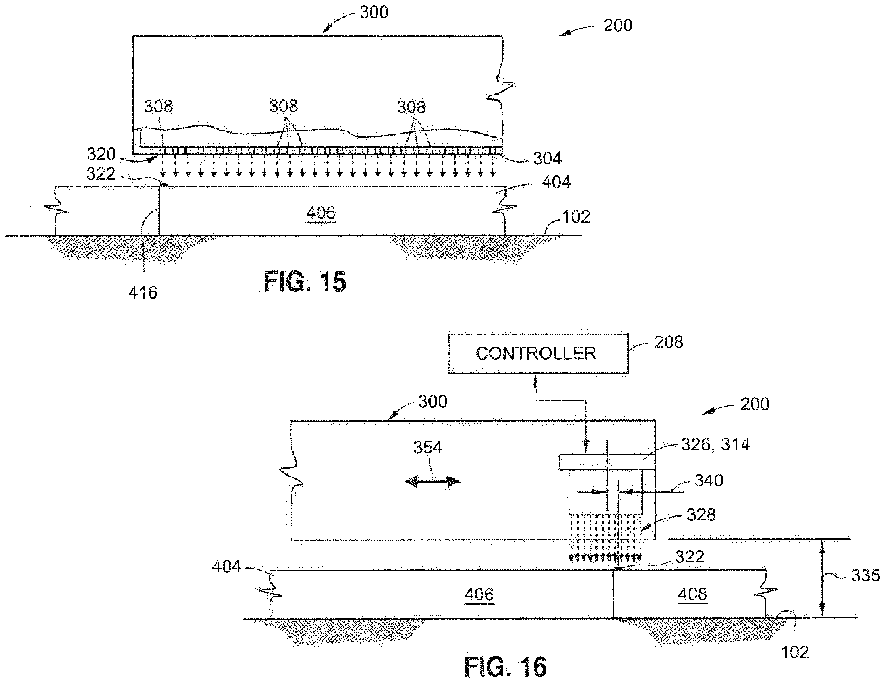

Figure 15 shows an example of a printhead 300 wherein the reference line printing mechanism 320 comprises one or more dedicated nozzles 308 configured to print the reference line 322 on at least one of opposing side edges 416 of a new image slice 406. The remaining nozzles 308 of the printhead 300 may be configured to print the image slice 404. In other examples not shown, the reference line printing mechanism 320 may comprise a dedicated line-printing device that may be mounted on the printhead 300 and configured to print a reference line 322 while the nozzles 308 of the printhead 300 print the image slice 404.

The printhead 300 may print the reference line 322 to be visible within a certain spectrum such as the visible spectrum and/or the infrared spectrum. In some examples, the reference line 322 may have a thickness that prevents detection by the human eye beyond a certain distance (e.g., more than 10 feet) from the surface 102. In other examples, the reference line 322 may be printed as a series of spaced dots (e.g., every 0.01 inch) which may be visually imperceptible beyond a certain distance to avoid detracting from the quality of the image. In still other examples, the color of the reference line 322 may be imperceptible relative to the local color of the image 400, or the reference line 322 may be invisible in normal ambient lighting conditions (e.g., shop light or sunlight) and may be fluorescent under a fluorescent light that may be emitted by the reference line sensor 326. Even further, the reference line 322 may be invisible within the visible spectrum, or the reference line 322 may initially be visible under ambient light and may fade over time under ambient conditions such as due to exposure to ultraviolet radiation.

In still further examples, the reference line 322 may be printed with at least one encoding pattern 324 (e.g., see Figure 13) along at least a portion of the reference line 322. The encoding pattern 324 may comprise a system of line segments or dashes separated by gaps. The encoding pattern 324 may represent information about the image slice 404. For example, the encoding pattern 324 may represents information regarding the distance from the current location (e.g., the location where the encoding pattern 324 is currently detected) of the printhead 300 relative to an end 412 of the image slice 404. Such information may be included in the signal transmitted to the controller 208 to allow the controller 208 to control the operation of the printhead 300. For example, the encoding pattern 324 may signal the controller 208 to synchronize or align a new image slice 406 being printed with the existing image slice 408, or to signal to the controller 208 to halt the ejection of droplets 330 in correspondence with the end of the existing image slice 408.

Figure 16 is a magnified view of an example of a printhead 300 having a reference line sensor 326 for sensing a reference line 322 of an image slice 404. The reference line sensor 326 may transmit to the controller 208 (Figure 14) a path-following-error signal representing the lateral spacing 340 between the reference line 322 and an indexing feature. The indexing feature may be the centerline of the reference line sensor 326, a hardpoint on the printhead 300 such as the nozzle 308 at an extreme end of the printhead 300, or some other indexing feature. As the printhead 300 is moved along a rastering path 350, the reference line sensor 326 may sense and transmit (e.g., continuously, in real-time) the path-following-error signal to the controller 208 representing the lateral spacing 340. Based 204 on the signal, the controller 208 may cause the lateral position of the printhead 300 to be adjusted (e.g., by the arm) such that the side edge 416 of the new image slice 406 is maintained in alignment with the side edge 416 of an existing image slice 408.

The reference line sensor 326 may be configured as an optical sensor of a vision system. In Figure 16, the optical sensor may emit an optical beam 328 for detecting the reference line 322. The optical sensor may generate a signal representing the lateral location where the optical beam 328 strikes the reference line 322. The signal may be transmitted to the robot 202 controller 208 on demand, at preprogrammed time intervals, continuously, or in other modes. In one example, the reference line sensor 326 may provide real-time alignment feedback to the robot 202 controller 208 for manipulating or adjusting the printhead 300 such that the side edges 416 of the new image slice 406 and existing image slice 408 are aligned. For example, the robot 202 may adjust the lateral position of the printhead 300 such that the side edges 416 of the new image slice 406 and the existing image slice 408 are aligned in non-gapped and/or non-overlapping relation as a new image slice 406 is being printed.

According to the claimed invention, instead of adjusting the lateral position of the printhead 300, the robot controller 208 maintains the lateral position of the printhead 300 during movement along the rastering path 350, and the controller 208 electronically controls or shifts the nozzles 308 on the printhead 300 that are actively ejecting droplets 330. In this regard, a printhead 300 has additional (e.g., unused) nozzles 308 located at one or both of the widthwise ends 306 of the printhead 300. Upon the controller 208 determining that a new image slice 406 is misaligned with an existing image slice 408, the controller 208 activates one or more of the unused nozzles 308 at one of the widthwise ends 306, and deactivate an equal number of nozzles 308 at an opposite widthwise end 306 of the printhead 300 to maintain the same image slice width of the new image slice 406 while effectively shifting the lateral position of the new image slice 406 without laterally moving the printhead 300. In this regard, an image slice 404 may be electronically offset in real-time or near real-time such that the side edge 416 of the new image slice 406 is maintained in non-gapping and/or non-overlapping relation with the side edge 416 of an existing image slice 408. In this manner, the reference line 322 advantageously provides a means for the printhead 300 to precisely maintain a nominal distance of a new image slice 406 relative to the rastering path 350 of an existing or previous-applied image slice 404, and thereby avoid gap between the image slices 404.

Figure 17 is a side view of an example of a robot 202 having high-bandwidth actuators 250 coupling the printhead 300 to an arm of the robot 202 and showing the printhead 300 printing an image 400 (e.g., an aircraft livery 402) on a surface 102 of a fuselage 104. As indicated above, a relatively large robot 202 may be required for printing large surfaces 102. Such a large-scale robot 202 may have a relatively high mass and relatively low stiffness which may result in an inherently large tolerance band of movement at the end 214 of the arm (e.g., the last axis of the robot) on which the printhead 300 may be mounted. In attempts to compensate for such inherently large tolerances, a large-scale robot 202 may require extensive computer programming (e.g., CNC or computer-numerical-control programming) which may add to production cost and schedule. Advantageously, by printing image slices 404 with the above-described image gradient bands 418 (Figures 7-12) and/or reference lines 322 (Figures 13-16), the robot-mounted printhead 300 of the present disclosure may print a high-quality image 400 on a surface 102 without the occurrence of gaps between adjacent image slices 404 that would otherwise detract from the overall quality of the image.

In Figure 17, one or more high-bandwidth actuators 250 may be mounted in series with the one or more arms of the robot 202. Such high-bandwidth actuators 250 may couple the printhead 300 to the last axis or arm of the robot 202 and provide a relatively small tolerance band for adjusting the an orientation and/or position of the printhead 300 relative to the surface 102 during movement of the printhead 300 along a rastering path 350 such that a new image slice 406 may be accurately aligned with an existing image slice 408. The high-bandwidth actuators 250 may be described as high-bandwidth in the sense that the high-bandwidth actuators 250 may have small mass and inherently high stiffness which may result in increased precision and rapid response time in positioning and orienting a printhead 300 relative to the large mass, low stiffness, and corresponding slow response time of a large-scale robot 202. Further in this regard, the high-bandwidth actuators 250 may rapidly respond to commands from the robot controller 208 based on path-following-error signals provided in real-time by the reference line sensor 326.

Referring still to Figure 17, the system 200 may include one or more high-bandwidth actuators 250 which may be configured to adjust the position of the printhead 300 along at least one of the following directions: (1) a transverse direction 354 of translation of the printhead 300 parallel to the surface 102 and perpendicular to the rastering path 350, (2) a normal direction 356 of translation of the printhead 300 locally normal to the surface 102, and (3) a roll direction 358 of rotation of the printhead 300 about an axis parallel to the rastering path 350. In addition, one or more high-bandwidth actuators 250 may be configured to adjust the position of the printhead 300 along other directions including, but not limited to, a parallel direction 352 of translation which may be described as parallel to the primary direction of movement of the printhead 300 along the rastering path 350 during the printing of an image slice 404.

Figure 18 shows an example of three (3) high-bandwidth actuators 250 coupling a printhead 300 to an arm of a robot 202 (Figure 17). In an embodiment, the high-bandwidth actuators 250 include a first actuator 250a, a second actuator 250b, and a third actuator 250c which may be generally aligned in an in-plane tripod configuration enabling adjustment of the printhead 300 along the transverse direction 354, the normal direction 356, and the roll direction 358 as described above. The first, second, and third actuators 250a, 250b, 250c may each have an upper end 268 and a lower end 270. The upper ends 268 of the first, second, and third actuators 250a, 250b, 250c may be pivotably coupled to the end of the arm of the robot and may have parallel pivot axes. The lower ends 270 of the first, second, and third actuators 250a, 250b, 250c may be pivotably coupled to the printhead 300 and may also have parallel pivot axes. As shown in Figure 18, the upper ends 268 of the first 250a and third actuator 250c are spaced apart from one another at the pivotable attachment to the end of the arm 214, and the lower ends 270 of the first 250a and third actuator 250c are spaced apart from one another at the pivotable attachment to the printhead 300. In this regard, the first actuator 250a and the third actuator 250c may be oriented generally parallel to one another. However, the first actuator 250a and the third actuator 250c may be oriented non-parallel relation to one another without detracting from the movement capability of the printhead 300 along the transverse direction 354, the normal direction 356, and the roll direction 358.

In Figure 18, the upper end 268 of the second actuator 250b may be located adjacent to the upper end 268 of the first actuator 250a. The lower end 270 of the second actuator 250b may be located adjacent to the lower end 270 of the third actuator 250c such that the second actuator 250b extends diagonally between the upper end 268 of the first actuator 250a and the lower end 270 of the third actuator 250c. In operation, the first, second, and third actuators 250a, 250b, 250c may be extended and retracted by different amounts to adjust the printhead 300 along the transverse direction 354, the normal direction 356, and the roll direction 358. In any one of the examples disclosed herein, one or more of the high-bandwidth actuators 250 may be configured as pneumatic cylinders or in other high-bandwidth actuator configurations including, but not limited to, hydraulic cylinders, electromechanical actuators, or other actuator configurations. In Figure 18, the printhead face 304 is oriented non-parallel to the surface 102 and laterally offset relative to the reference line 322.

Figure 19 is a side view of the printhead 300 after being repositioned by the high-bandwidth actuators 250 (e.g., the first, second, and third actuators 250a, 250b, 250c) into alignment with the reference line 322 and reorientation of the printhead face 304 into parallel relation with the surface 102. In this regard, the controller 208 (Figure 14) may command the translation and re-orientation of the printhead 300 based on continuous input signals that may be received in real-time from the position sensors 314 and/or reference line sensors 326 tracking the reference line 322 during printing of a new image slice 406. For example, the high-bandwidth actuators 250 may translate the printhead 300 along the transverse direction 354 and the normal direction 356 and may rotate the printhead 300 along the roll direction 358 to orient the printhead face 304 parallel the local surface 102 while aligning the side edge 416 of a new image slice 406 with the side edge 416 of an existing image slice 408.

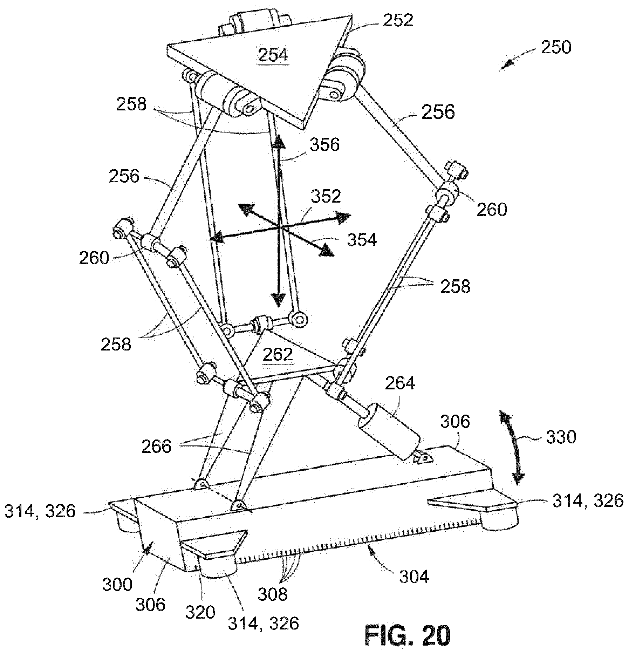

Figure 20 is a further example of high-bandwidth actuators 250 configured as a delta robot 252 and mounted in series with the robot arm and coupling the printhead 300 to the end 214 (Figure 19) of the robot arm (Figure 17). In Figure 20, the delta robot 252 may include an actuator base 254 which may be attached to the end 214 of a robot arm (e.g., a second arm 212). Three (3) actuator upper arms 256 may be pivotably coupled to the actuator base 254 and may have co-planar pivot axes oriented at 60 degrees relative to one another. Each actuator upper arm 256 may be coupled by a hinge joint 260 to a pair of actuator lower arms 258. Each pair of actuator lower arms 258 may be configured as a parallelogram four-bar-mechanism. Each one of three (3) pairs of lower arms 258 may be pivotably coupled to an actuator platform 262 through six (6) hinge joints wherein each hinge joint is capable of rotation about a single axis. The three (3) parallelogram four-bar-mechanisms of the three (3) actuator lower arms 258 limit movement of the actuator platform 262 to translation (e.g., movement in the x-y direction) and extension (e.g., movement in the z-direction), and prevent rotation of the actuator platform 262. In this regard, the actuator platform 262 is maintained in parallel relation with the actuator base 254 regardless of the direction of translation and/or extension of the actuator platform 262. In an example not shown, the delta robot 252 may be provided with spherical joints (not shown) and upper and lower arms (not shown) arranged in a manner that maintains the actuator platform 262 in parallel relation to the actuator base 254 during translation and/or extension of the actuator platform 262.

In Figure 20, the translation capability of the actuator platform 262 provides for translation of the printhead 300 along the above-described transverse direction 354 (e.g., the y-direction) and normal direction 356 (e.g., the z-direction) relative to the surface 102 being printed. The high-bandwidth actuator 250 arrangement of Figure 20 may provide rotational capability of the printhead 300 along the roll direction 358 by means of one or more roll actuators 264 for pivoting the printhead 300 about one or more attachment links 266. The upper ends of the attachment links 266 may be fixedly coupled to the actuator platform 262. The lower ends of the attachment links 266 may be pivotably coupled to the printhead 300. The high-bandwidth actuator 250 arrangement of Figure 20 may represent a low mass, high stiffness actuator system providing increased precision and improved response time for adjusting the position of the printhead 300 according to a path-following-error that may be resolved using the reference line sensor 326 tracking the reference line 322 of an existing image slice 408. As indicated above, the high-bandwidth actuators 250 may adjust the position and/or orientation of the printhead 300 with a precision that may be unobtainable with the robot 202 acting alone.

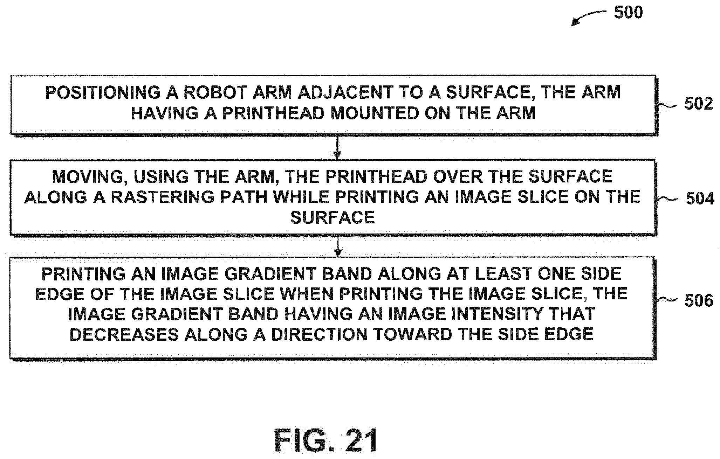

Figure 21 is a flowchart of one or more operations that may be included in method 500 of printing an image 400 on a surface 102. The method may be implemented using the system 200 described above. Step 502 of the method 500 may include positioning an arm of a robot 202 adjacent to a surface 102. As indicated above, a printhead 300 may be mounted on an end 214 of the arm. In some examples, the printhead 300 may be an inkjet printhead 300 having an array of nozzles 308 or orifices for ejecting droplets 330 of ink, paint, or other fluids or colorants.

Step 504 of the method 500 may include moving, using the arm, the printhead 300 over the surface 102 along a rastering path 350 while the printhead 300 prints an image slice 404 on the surface 102, as shown in Figure 7. The printhead 300 may be moved by the arm along the rastering path 350 to print a new image slice 406 in parallel relation to an existing image slice 408.

Step 506 of the method 500 may include printing an image gradient band 418 along at least one side edge 416 of an image slice 404 when printing the image slice 404 on the surface 102, as shown in Figure 8. As described above, the image gradient band 418 may have an image intensity that decreases along a transverse direction 354 (e.g., relative to the rastering path 350) toward a side edge 416 of the image slice 404. In some examples, the image gradient of the image gradient band 418 may be linear (e.g., a linear decrease in the image density) along the transverse direction 354. In other examples, the image gradient of an image gradient band 418 may be non-linear.

As shown in Figure 8, a printhead 300 may print a new image slice 406 such that the image gradient band 418 of the new image slice 406 overlaps the image gradient band 418 of an existing image slice 408. For example, the side edge 416 of the new image slice 406 may be aligned with an inner boundary 420 of an overlapping or overlapped image gradient band, as mentioned above. The method may include printing, using the printhead 300, the image gradient band 418 of the new image slice 406 and the existing image slice 408 such that the overlapping image gradient bands 418 have a collective image intensity that is equivalent to the image intensity of the inner portion 414 of the new image slice 406 and/or the existing image slice 408

As shown in Figure 9 and mentioned above, an image gradient band 418 may be generated by ejecting droplets 330 from the printhead 300 nozzles 308 with progressively larger droplet spacings 332 along a direction toward the side edge 416 of the image slice 404 as compared to a uniform droplet spacing 332 for the nozzles 308 that print the inner portion 414 of the image slice 404. As shown in Figure 10, an image gradient band 418 may also be generated by ejecting progressively smaller droplet sizes 334 along a direction toward the side edge 416. The method may optionally include forming a new image slice 406 with an image gradient end (not shown) on at least one of opposing ends of the new image slice 406 as a means to blend or feather the image slice 404 into an area bordering the new image slice 406.

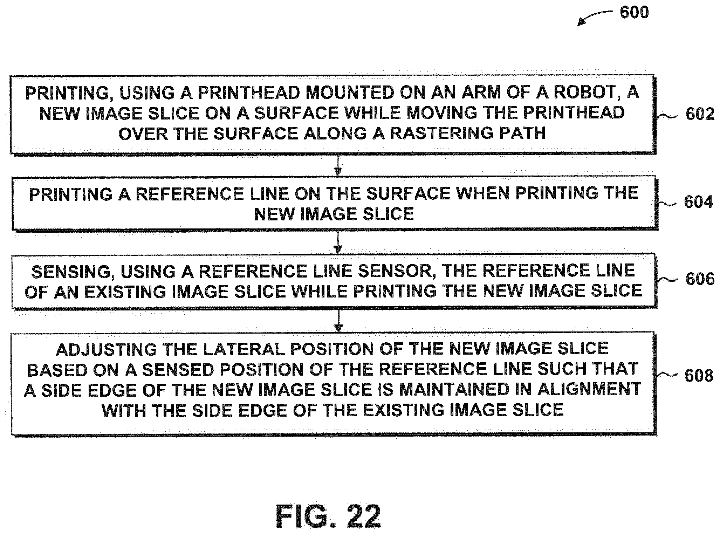

Figure 22 is a flowchart of one more operations that may be included in a further method 600 of printing an image 400 on a surface 102. Step 602 of the method 600 may include printing, using a printhead 300 mounted on an arm of a robot 202, a new image slice 406 on the surface 102 while moving the printhead 300 over the surface 102 along a rastering path 350. Step 604 of the method 600 may include printing a reference line 322 on the surface 102 when printing the new image slice 406, as shown in Figure 13 and described above. The printhead 300 may include a reference line printing mechanism 320 configured to print the reference line 322 on the surface 102 when printing the new image slice 406. In some examples, the reference line printing mechanism 320 may comprise at least one nozzle 308 of the printhead 300 which may eject ink or paint that is a different color that the ink or paint ejected by adjacent nozzles 308. In other examples, the reference line printing mechanism 320 may comprise a dedicated reference line printer (not shown).

The printhead 300 may print a reference line 322 on at least one of opposing side edges 416 of a new image slice 406 when printing the new image slice 406. The step of printing the reference line 322 may include printing the reference line 322 with at least one encoding pattern 324 along at least a portion of the reference line 322. The encoding pattern 324 may comprise a series of line segments separated by gaps. The encoding pattern 324 may alternatively or additionally comprise localized changes in the color of the reference line 322, or a combination of both line segments, gaps, color changes, and other variations in the reference line for encoding information. The encoding pattern 324 may represent information regarding the image slice 404 such as the distance to the end 412 of the image slice 404 or other information about the image 400. The information may be transmitted to the controller 208 which may adjust one or more printing operations based on the information contained in the encoding pattern 324.

Step 606 of the method 600 may include sensing, using a reference line sensor 326 included with the printhead 300, the reference line 322 of an existing image slice 408 while printing the new image slice 406. As indicated above, a reference line sensor 326 may sense the reference line 322 of an existing image slice 408 and transmit a signal to the robot 202 and/or controller 208 causing the arm to adjust the printhead 300 such that the side edge 416 of the new image slice 406 is aligned with and/or is maintained in non-gapping and non-overlapping relation with the side edge 416 of the existing image slice 408.

Step 608 of the method 600 may include adjusting the lateral position of the new image slice 406 based on a sensed position of the reference line 322 to align a side edge 416 of the new image slice 406 with the side edge 416 of the existing image slice 408. In one example, the method may include detecting a misalignment of the side edge 416 of a new image slice 406 with the side edge 416 of an existing image slice 408 and providing real-time alignment feedback to the robot 202 and/or controller 208 for manipulating or adjusting the lateral position of the printhead 300 such that the side edge 416 of the new image slice 406 is aligned with the side edge 416 of the existing image slice 408. In this regard, the step of adjusting the lateral position of the new image slice 406 may include transmitting a signal from the reference line sensor 326 (e.g., an optical sensor) to the robot 202 and/or controller 208. The robot 202 and/or controller 208 may determine a correction input for the robot based on the misalignment of the printhead 300.

The method may include adjusting the position of the printhead 300 such that the side edge 416 of the new image slice 406 is maintained in non-gapped and non-overlapping relation with the side edge 416 of the existing image slice 408. In this regard, the lateral position of the printhead 300 may be physically adjusted to align the side edge 416 of the new image slice 406 with the side edge 416 of the existing image slice 408. According to the claimed invention, the method includes electronically shifting the nozzles 308 that are actively ejecting droplets 330 to align the side edge 416 of the new image slice 406 with the side edge 416 of the existing image slice 408, as mentioned above.

The adjustment of the position and/or orientation of the printhead 300 may be facilitated using one or more high-bandwidth actuators 250 coupling the printhead 300 to an end 214 of an arm of the robot 202, as described above and illustrated in Figures 17-20. The high-bandwidth actuators 250 may adjust an orientation and/or position of the printhead 300 relative to the surface 102 during movement of the printhead 300 along the rastering path 350. The reference line sensor 326 may sense the reference line 322 and transmit a signal to the robot 202 for determining an adjustment to the lateral position of the printhead 300. The robot 202 and/or controller 208 may command the high-bandwidth actuators 250 to adjust the position of the printhead 300 such that the side edge 416 of the new image slice 406 is maintained in non-gapped relation with the side edge 416 of the existing image slice 408.

The method may include adjusting the printhead 300 by translating the printhead 300 along a transverse direction 354 parallel to the surface 102 and perpendicular to the rastering path 350, translating the printhead 300 along a normal direction 356 that is normal to the surface 102, and/or rotating the printhead 300 along a roll direction 358 about an axis parallel to the rastering path 350. Advantageously, the high-bandwidth actuators 250 may provide increased precision and rapid response time in adjusting the position and/or orientation of the printhead 300.

## Claims

1. A method for printing an image (400) on a surface (102), comprising:
printing, using a printhead (300) mounted to an arm (210) of a robot (202), a new image slice (406) on the surface (102) while moving the printhead (300) over the surface (102) along a rastering path (350);
printing a reference line (322) on the surface (102) when printing the new image slice (406);
sensing, using a reference line sensor (326), the reference line (322) of an existing image slice (408) while printing the new image slice (406); and
adjusting the lateral position of the new image slice (406) based on a sensed position of the reference line (322) in a manner aligning a side edge (416) of the new image slice (406) with the side edge (416) of the existing image slice (408),
wherein the step of adjusting the lateral position of the new image slice (406) includes electronically shifting nozzles (308) actively ejecting droplets (330) by activating one or more unused nozzles (308) at one end of widthwise ends (306) of the printhead (306) and deactivating an equal number of nozzles (308) at an opposite widthwise end (306) of the printhead (300) while effectively shifting a lateral position of the new image slice (406) without laterally moving the printhead (300).

2. The method of Claim 1, wherein the step of printing the reference line (322) comprises:
printing the reference line using at least one nozzle (308) of the printhead (300).

3. The method of any of Claims 1 to 2, wherein the reference line (322) is printed with at least one encoding pattern (324) along at least a portion of the reference line (322).

4. The method of claim 3, wherein the encoding pattern (324) comprises a system of line segments separated by gaps.

5. The method of claim 3, wherein the encoding pattern (324) comprises a system of dashes separated by gaps.

6. The method of any of claims 3 to 5, wherein the encoding pattern represents information about the new image slice (406).

7. The method of any of claims 3 to 6, wherein the encoding pattern (324) represents information regarding a distance from a current location of the printhead (300), where the encoding pattern (324) is currently detected, relative to an end of the new image slice (406).

8. The method of claim 6 or 7, wherein the information is included in a signal transmitted to a controller (208) to allow the controller (208) to control operation of the printhead (300).

9. The method of claim 8, wherein the encoding pattern (324) is configured to signal the controller (208) to synchronize or align the new image slice (406) being printed with the existing image slice (408).

10. The method of claim 8, wherein the encoding pattern (324) is configured to signal to the controller (208) to halt ejection of the droplets (330) in correspondence with an end of the existing image slice (408).

11. The method of any of claims 1 to 10, wherein the rastering path is located immediately adjacent to and non-overlapping an existing image slice previously printed by the printhead moving over the surface along an existing rastering path, wherein the new image slice is preferably printed along the new rastering path with the side edge of the existing image slice previously printed along the existing rastering path.

## Patentansprüche

1. Verfahren zum Drucken eines Bilds (400) auf eine Fläche (102), das aufweist:
Drucken, unter Verwendung eines Druckkopfs (300), der an einen Arm (210) eines Roboters (202) montiert ist, eines neuen Bildstücks (406) auf die Fläche (102), während sich der Druckkopf (300) über die Fläche (102) entlang eines Rasterpfads (350) bewegt;
Drucken einer Referenzlinie (322) auf die Fläche (102), wenn das neue Bildstück (406) gedruckt wird;
Erfassen, unter Verwendung eines Referenzliniensensors (326), der Referenzlinie (322) eines existierenden Bildstücks (408), während das neue Bildstück (406) gedruckt wird; und
Einstellen der lateralen Position des neuen Bildstücks (406) basierend auf einer erfassten Position der Referenzlinie (322) auf eine Weise, die einen Seitenrand (416) des neuen Bildstücks (406) zu dem Seitenrand (416) des existierenden Bildstücks (408) ausrichtet,
wobei der Schritt eines Einstellens der lateralen Position des neuen Bildstücks (406) ein elektronisches Verlagern von Düsen (308) umfasst, die Tröpfchen (330) aktiv ausgeben, indem eine oder mehrere unbenutzte Düsen (308) an einem Ende von Enden (306) in einer Breitenrichtung des Druckkopfs (306) aktiviert werden und indem eine gleiche Anzahl von Düsen (308) an einem gegenüberliegenden Ende (306) in der Breitenrichtung des Druckkopfs (300) deaktiviert werden, während eine laterale Position des neuen Bildstücks (406) effektiv verlagert wird, ohne den Druckkopf (300) lateral zu bewegen.

2. Verfahren nach Anspruch 1, wobei der Schritt eines Druckens der Referenzlinie (322) aufweist:
Drucken der Referenzlinie unter Verwendung von zumindest einer Düse (308) des Druckkopfs (300).

3. Verfahren nach einem der Ansprüche 1 bis 2, wobei die Referenzlinie (322) mit zumindest einem kodierenden Muster (324) entlang zumindest eines Abschnitts der Referenzlinie (322) gedruckt wird.

4. Verfahren nach Anspruch 3, wobei das kodierende Muster (324) ein System von Liniensegmenten aufweist, die durch Abstände getrennt sind.

5. Verfahren nach Anspruch 3, wobei das kodierende Muster (324) ein System von Strichen aufweist, die durch Abstände getrennt sind.

6. Verfahren nach einem der Ansprüche 3 bis 5, wobei das kodierende Muster eine Information über das neue Bildstück (406) repräsentiert.

7. Verfahren nach einem der Ansprüche 3 bis 6, wobei das kodierende Muster (324) eine Information hinsichtlich eines Abstands von einem aktuellen Ort des Druckkopfs (300), wobei das kodierende Muster (324) aktuell erfasst wird, relativ zu einem Ende des neuen Bildstücks (406) repräsentiert.

8. Verfahren nach Anspruch 6 oder 7, wobei die Information von einem Signal umfasst ist, das an eine Steuereinrichtung (208) gesendet wird, um es der Steuereinrichtung (208) zu ermöglichen, einen Betrieb des Druckkopfs (300) zu steuern.

9. Verfahren nach Anspruch 8, wobei das kodierende Muster (324) eingerichtet ist, der Steuereinrichtung (208) zu signalisieren, das neue Bildstück (406) zu synchronisieren oder auszurichten, das mit dem existierenden Bildstück (408) gedruckt wird.

10. Verfahren nach Anspruch 8, wobei das kodierende Muster (324) eingerichtet ist, an die Steuereinrichtung (208) zu signalisieren, eine Ausgabe der Tröpfchen (330) in Übereinstimmung mit einem Ende des existierenden Bildstücks (408) anzuhalten.

11. Verfahren nach einem der Ansprüche 1 bis 10, wobei sich der Rasterpfad unmittelbar benachbart zu und nicht überlappend mit einem existierenden Bildstück befindet, das zuvor durch den Druckkopf gedruckt wurde, der sich über die Fläche entlang eines existierenden Rasterpfads bewegt, wobei das neue Bildstück vorzugsweise entlang des neuen Rasterpfads bei dem Seitenrand des existierenden Bildstücks gedruckt wird, das zuvor entlang des existierenden Rasterpfads gedruckt wurde.

## Revendications

1. Procédé d'impression d'une image (400) sur une surface (102), comprenant :
l'impression, au moyen d'une tête d'impression (300) montée sur un bras (210) d'un robot (202), d'une nouvelle tranche d'image (406) sur la surface (102) tout en déplaçant la tête d'impression (300) sur la surface (102) le long d'un chemin de balayage (350) ;
l'impression d'une ligne de référence (322) sur la surface (102) lors de l'impression de la nouvelle tranche d'image (406) ;
la détection, au moyen d'un détecteur de ligne de référence (326), de la ligne de référence (322) d'une tranche d'image existante (408) pendant l'impression de la nouvelle tranche d'image (406) ; et
le réglage de la position latérale de la nouvelle tranche d'image (406) en fonction d'une position détectée de la ligne de référence (322) d'une manière alignant un bord latéral (416) de la nouvelle tranche d'image (406) avec le bord latéral (416) de la tranche d'image existante (408),
dans lequel l'étape de réglage de la position latérale de la nouvelle tranche d'image (406) comporte le décalage électronique de buses (308) éjectant activement des gouttelettes (330) par activation d'une ou plusieurs buses non utilisées (308) à une extrémité d'extrémités dans la largeur (306) de la tête d'impression (306) et désactivation d'un nombre égal de buses (308) à une extrémité dans la largeur opposée (306) de la tête d'impression (300) tout en décalant effectivement une position latérale de la nouvelle tranche d'image (406) sans déplacer latéralement la tête d'impression (300).

2. Procédé de la revendication 1, dans lequel l'étape d'impression de la ligne de référence (322) comprend :
l'impression de la ligne de référence au moyen d'au moins une buse (308) de la tête d'impression (300).

3. Procédé de l'une quelconque des revendications 1 à 2, dans lequel la ligne de référence (322) est imprimée avec au moins un motif de codage (324) le long d'au moins une partie de la ligne de référence (322).

4. Procédé de la revendication 3, dans lequel le motif de codage (324) comprend un système de segments de ligne séparés par des espaces.

5. Procédé de la revendication 3, dans lequel le motif de codage (324) comprend un système de tirets séparés par des espaces.

6. Procédé de l'une quelconque des revendications 3 à 5, dans lequel le motif de codage représente des informations sur la nouvelle tranche d'image (406).

7. Procédé de l'une quelconque des revendications 3 à 6, dans lequel le motif de codage (324) représente des informations concernant une distance depuis un emplacement actuel de la tête d'impression (300), où le motif de codage (324) est actuellement détecté, jusqu'à une extrémité de la nouvelle tranche d'image (406).

8. Procédé de la revendication 6 ou 7, dans lequel les informations sont contenues dans un signal transmis à un dispositif de commande (208) pour permettre au dispositif de commande (208) de commander le fonctionnement de la tête d'impression (300).

9. Procédé de la revendication 8, dans lequel le motif de codage (324) est configuré pour signaler au dispositif de commande (208) de synchroniser ou d'aligner la nouvelle tranche d'image (406) en train d'être imprimée avec la tranche d'image existante (408).

10. Procédé de la revendication 8, dans lequel le motif de codage (324) est configuré pour signaler au dispositif de commande (208) d'interrompre l'éjection des gouttelettes (330) en correspondance avec une extrémité de la tranche d'image existante (408).

11. Procédé de l'une quelconque des revendications 1 à 10, dans lequel le chemin de balayage est situé au voisinage immédiat de et ne chevauche pas une tranche d'image existante imprimée antérieurement par la tête d'impression se déplaçant sur la surface le long d'un chemin de balayage existant, la nouvelle tranche d'image étant de préférence imprimée le long du nouveau chemin de balayage avec le bord latéral de la tranche d'image existante imprimée antérieurement le long du chemin de balayage existant.
